# EUROPEAN PATENT APPLICATION

(11) **EP 2 455 660 A2**
(43) Date of publication of application: **23.05.2012**
(21) Application number: 11189619.7
(22) Date of filing: 17.11.2011
(51) Int. Cl.: F23N 1/02, F23N 3/08, F23N 5/18

(54) **Premix air heater**

(30) Priority: 18.11.2010 US 414997 P; 14.11.2011 US 295136
(71) Applicant: Thomas & Betts International, Inc., Wilmington, DE 19809 (US)
(72) Inventor: Grammens, Chris, 8730 Oedelem (BE); Raes, Niko, 9052 Zwijnaarde (BE)
(74) Representative: Howick, Nicholas Keith

(57) **Abstract**

A gas-fired heater (100) includes a gas supply line (110), an air supply line (130), a valve (120) coupled to the gas supply line (100) and a controller (122) coupled to the valve (120). The controller (122) is configured to control the valve (120) to control a gas-air mixture. The gas-fired heater also includes a burner (140) configured to receive the gas-air mixture and burn the gas-air mixture, and a heat exchanger (150) coupled to the burner (140). The heat exchanger (150) is configured to perform a heat exchange process and output heated air. The gas-fired heater (100) further includes a combustion fan (160) located downstream of the heat exchanger (150), the combustion fan (160) being configured to pull or draw flue gases through the heat exchanger (150).

## Description

The invention relates to gas-fired heaters and heating systems.

### BACKGROUND INFORMATION

Conventional premix gas fired air heaters typically use a combustion fan to push a gas/air mixture through a heat exchanger. This is accomplished by means of a combustion fan located upstream of the heat exchanger, which pushes the gas/air mixture towards the combustion chamber. One drawback with using such conventional premix heaters is that the combustion chamber and heat exchanger are often over-pressurized by the combustion fan.

According to the invention there is provided gas-fired heater, comprising:

a gas supply line;

an air supply line;

a valve coupled to the gas supply line;

a controller coupled to the valve, the controller configured to control the valve to control a gas-air mixture;

a burner configured to receive the gas-air mixture and burn the gas-air mixture;

a heat exchanger coupled to the burner, the heat exchanger configured to perform a heat exchange process and output heated air; and

a fan located downstream of the heat exchanger, the fan being configured to draw flue gases through the heat exchanger and provide negative pressure to draw the gas-air mixture through the burner and the valve.

The invention further provides a system, comprising:

a gas-fired heater, the gas-fired heater comprising:

a gas supply,

an air supply,

a valve coupled to the gas supply,

a controller coupled to the valve, the controller configured to control the valve (120) to control a gas-air mixture,

a burner configured to receive the gas-air mixture and burn the gas-air mixture,

a heat exchanger coupled to the burner, the heat exchanger configured to output heated air, and

a fan located adjacent the heat exchanger, the fan being configured to pull flue gases through the heat exchanger and the gas-air mixture through the burner, the valve and a venturi coupled to the air supply

### BRIEF DESCRIPTION OF THE DRAWINGS

Fig. 1 is a schematic diagram of a premix heater consistent with an exemplary implementation;

Fig. 2 is a simplified functional block diagram of the premix heater of Fig. 1;

Figs. 3A and 3B are isometric views of an exemplary premix heater consistent with an exemplary implementation;

Fig. 4 is an isometric view of an exemplary heat exchanger that may be used in the premix heater of Fig. 1;

Fig. 5 is an isometric view of another exemplary heat exchanger that may be used in the premix heater of Fig. 1; and

Fig. 6 is an isometric view of yet another exemplary heat exchanger that may be used in the premix heater of Fig. 1.

### DETAILED DESCRIPTION OF PREFERRED EMBODIMENTS

The following detailed description refers to the accompanying drawings. The same reference numbers in different drawings may identify the same or similar elements. Also, the following detailed description does not limit the invention.

Embodiments described herein provide a premix air heater that includes a downstream fan that pulls or draws air through a heat exchanger. As a result of the location of the fan, the heat exchanger is effectively under a negative pressure, which helps prevent introduction of flue gases into an interior space. For example, a small leak in the combustion chamber or heat exchanger will not result in flue gases being expelled into the interior space. The fan may also be a variable speed fan that does not affect the gas-air mixture provided to the combustion chamber, which allows the air heater to achieve high efficiency at all loads.

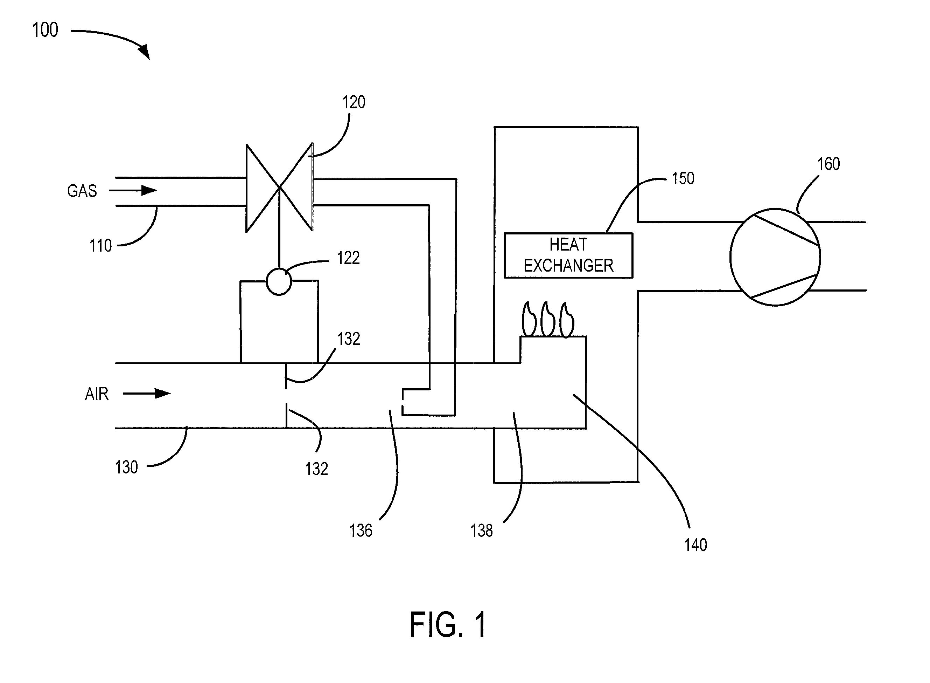

Fig. 1 is a schematic view of a premix heater unit 100 in accordance with an exemplary implementation. Referring to Fig. 1, heater unit 100 may include gas intake supply 110, valve 120, controller 122, air intake supply 130, burner 140, heat exchanger 150 and fan 160. The exemplary configuration illustrated in Fig. 1 is provided for simplicity. It should be understood that heater unit 100 may include more or fewer components than illustrated in Fig. 1.

Gas intake supply 110 may include a gas line or a connection to a gas line that supplies gas to heater unit 100. Valve 120 may be a control valve that operates in conjunction with controller 122 to provide a constant gas-to-air volume or ratio with respect to heater unit 100. For example, controller 122 may include a pneumatic controller or electronic controller that opens/closes valve 120 to a point that ensures that the gas/air ratio provided to burner 140 is provided at the desired level, as described in more detail below.

Air intake supply 130 may include an air intake area in which air may be received, as illustrated by the arrow in Fig. 1. For example, air may be received through an air inlet connection located on the external side of heater unit 100. In an exemplary implementation, air intake supply 130 may include restrictions 132, also referred to herein as venturi 132, that control the air flow in heater unit 100. For example, restrictions 132 may create a narrowing or venturi to reduce the size of the openings in air intake supply 130. Such restrictions 132 may decrease the pressure of air on the downstream side of the restrictions.

As illustrated in Fig. 1, after gas flows through valve 120, gas from gas intake supply 110 is mixed with air at area 136. A gas/air mixture may then be provided to burner 140 at the input to burner 140, illustrated as area 138 in Fig. 1. In an exemplary implementation, controller 122 may ensure that the gas-to-air (gas/air) ratio provided to burner 140 is constant. That is, regardless of the speed of fan 160, the gas/air ratio is maintained at a constant level. This may help heater unit 100 achieve and maintain heating efficiency at all loads or modulation levels.

Burner 140 may include a burner/combustion unit that is used to provide combustion to burn the incoming gas/air mixture. Heat exchanger 150 may be coupled to burner 140 and may operate to perform heat transfer with respect to output from burner 140 and output heated air for warming an interior space.

Fan 160 may be a variable speed fan that acts to "pull" or draw the gas/air mixture through heat exchanger 150. For example, fan 160 may essentially produce a negative pressure with respect to heat exchanger 150. This negative pressure acts to pull the gas/air mixture from area 138 through burner 140 and heat exchanger 150. The downstream location of fan 160 with respect to the flow of the gas/air mixture to burner 140 and heat exchanger 150 also prevents flue gases from entering the interior space. That is, all gases will be pulled through heat exchanger 150 and will not be expelled directly into the interior space. As a result, heater unit 100 may provide little to no risk of dangerous emissions into an interior space, thereby achieving maximum safety.

An enclosure (not shown in Fig. 1) may be used to house the components of heater unit 100. For example, the enclosure may be metal or some other material (e.g., a composite).

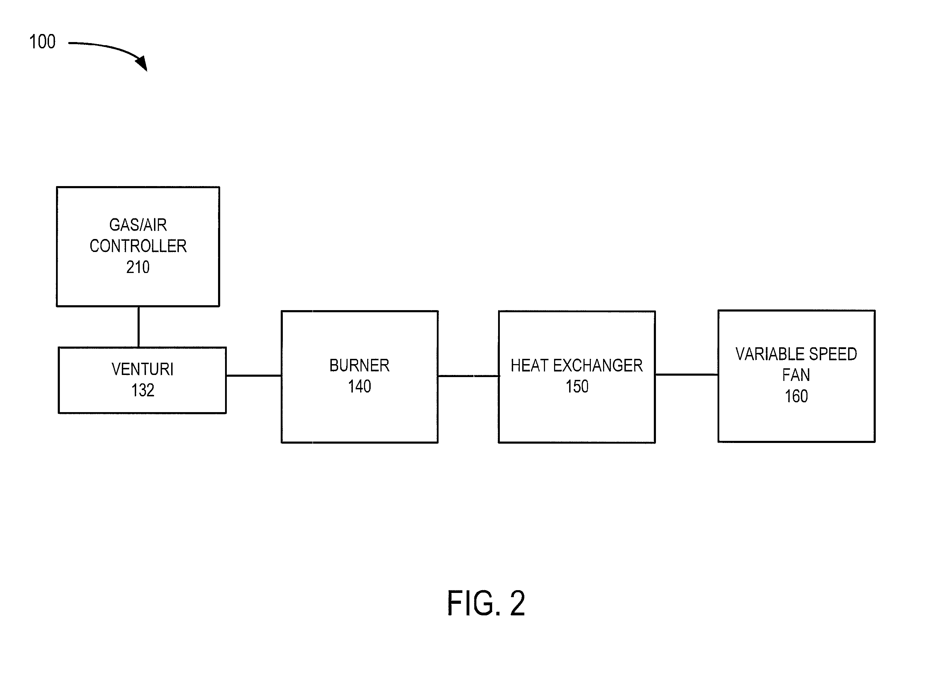

Fig. 2 illustrates a simplified functional view of heater unit 100 of Fig. 1 in accordance with an exemplary implementation. Referring to Fig. 2, heater unit 100 may include gas/air controller 210, venturi 132, burner 140, heat exchanger 150 and variable speed fan 160. Gas/air controller 210 may include valve 120 and controller 122 of Fig. 1. In an exemplary implementation, gas/air controller 210 may include pneumatic controls that provide a zero pressure governor that releases an amount of gas from gas intake supply 110 corresponding to or in a fixed relationship to the pressure drop of combustion air over a venturi (e.g., venturi 132) located in air intake supply 130. For example, gas/air controller 210 may measure the air pressure drop in air supply line 130 caused by venturi 132 (Fig. 1). Gas/air controller 210 may then control valve 120 to provide gas pressure corresponding to the measured air pressure drop caused by venturi/restrictions 132. In this manner, gas/air controller 210 may provide a constant gas/air mixture to burner 140 that is independent of the speed of fan 160.

As illustrated in Fig. 2, gas/air controller 210 may be coupled to venturi 132. In an exemplary implementation, venturi 132 may be mounted or coupled directly to burner 140. Burner 140 may include a burner box to burn the gas/air mixture provided via venturi 132. Heat exchanger 150 may receive the output from burner 140 and perform a heat exchange process to provide heated air to an interior space. In an exemplary implementation, burner 140 and heat exchanger 150 may be contained within a sealed box/enclosure that includes no secondary air inlets. That is, air received via venturi 132 and used during combustion by burner 140 is premixed with the gas.

Fan 160 (also referred to herein as combustion fan 160), as described above, may be a variable speed fan located downstream of heat exchanger 150. As described above, the downstream location of combustion fan 160 with respect to heat exchanger 150 effectively creates a negative pressure on burner 140 and heat exchanger 150. As a result, flue gases are "sucked" through heat exchanger 150. Therefore, if a leak occurred in burner 140, extra air may be sucked into heat exchanger 150. Flue gases, however, would not escape heat exchanger 150 and would not enter the interior space. In this manner, fan 160 reduces the potential for harmful emissions into an interior space.

The exemplary configuration illustrated in Fig. 2 is provided for simplicity. It should be understood that heater unit 100 may include more or fewer devices than illustrated in Fig. 2.

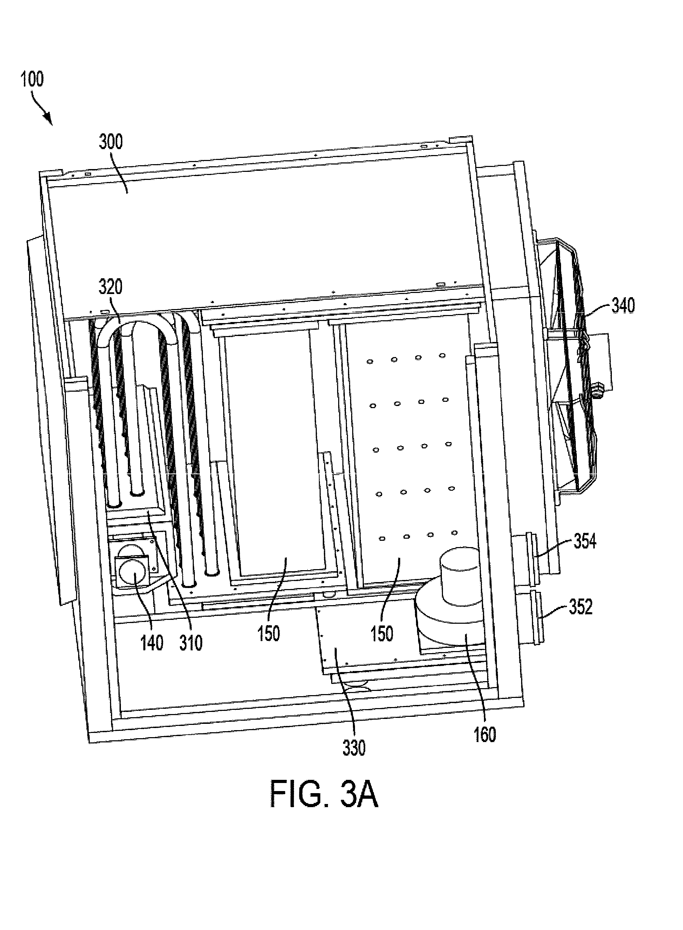

Fig. 3A illustrates a three dimensional graphical view of heater unit 100 consistent with an exemplary implementation. Referring to Fig. 3A, heater unit 100 may include enclosure 300 that houses elements discussed above with respect to Figs. 1 and 2. For example, enclosure 300 may house burner 140, heat exchanger 150 and combustion fan 160. Enclosure 300 may also house burner box 310, tubes 320, collector box 330 and main air fan 340, as illustrated in Fig. 3A. The sides of enclosure 300 are not shown in Fig. 3A. However, as discussed above, enclosure 300 may form a complete enclosure around the components illustrated in Fig. 3A.

Referring to Fig. 3A, burner 140 may receive the gas/air supply via, for example, a gas/air supply inlet. A venturi (not shown), such as venturi 132 (Fig. 1), may also be coupled to gas/air supply inlet. Burner 140 may be included in burner box 310, which may be a completely sealed box made from, for example, stainless steel. As described above, burner box 310 may include no secondary or supplemental air inlets. That is, all the air used during combustion is provided by the gas/air mixture provided via a gas/air supply inlet.

In the implementation illustrated in Fig. 3A, tubes 320 may be coupled (e.g., welded) to burner box 310 and may be made of, for example, stainless steel. A turning box (not shown) may be coupled to tubes 320 to collect condensation on low loads. Tubes 320 may also guide flue gases to heat exchanger 150. A condensate drain may also be used to guide the condensate from the turning box to collector box 330.

Heat exchanger 150 may include any number of different types of heat exchangers. For example, in one implementation, heat exchanger 150 may include a shell and tube heat exchanger. In other implementations, heat exchanger 150 may include a plate heat exchanger. In still other implementations, heat exchanger 150 may include a combination of shell and tube heat exchanger and a plate heat exchanger. In the implementation illustrated in Fig. 3A, assume that the heat exchanger 150 includes a number of plate heat exchangers. The plate heat exchangers may be fabricated separately with a turning box, or in a single U-shape. In either case, heat exchanger 150 may be configured/designed such that condensation is always achieved, even while heater unit 100 is at full load. That is, heater unit 100 will not have to introduce additional/secondary supply air to burner 140 to achieve condensation. This helps ensure that heater unit 100 will have very good efficiency regardless of the speed of combustion fan 160 and that high efficiency may be maintained at all modulations of heater unit 100.

Collector box 330 may be coupled to heat exchanger 150 and may include a single condensate drain that drains all condensate from heater unit 100. Collector box 330 may also be coupled to combustion fan 160 and a supply duct (not shown) that provides heated air to an interior space. For example, speed controlled fan 160 may be mounted adjacent collector box 330, as illustrated in Fig. 3A. Combustion fan 160, also referred to herein as exhaust flue fan 160, may include outlet connection 352 for exhausting flue gases from heater unit 100.

Air inlet connection 354 illustrated in Fig. 3A may provide combustion air to burner 140 to aid in igniting or combustion of the gas/air mixture provided to burner 140 via area 138 illustrated in Fig. 1. That is, air inlet connection 354 may provide pure combustion air to burner 140.

Main air fan 340 may be used to provide the heated air to the interior space. In some implementations, main air fan 340 may not be required. For example, if heater unit 100 is incorporated into an air handling unit, main air fan 340 may not be required.

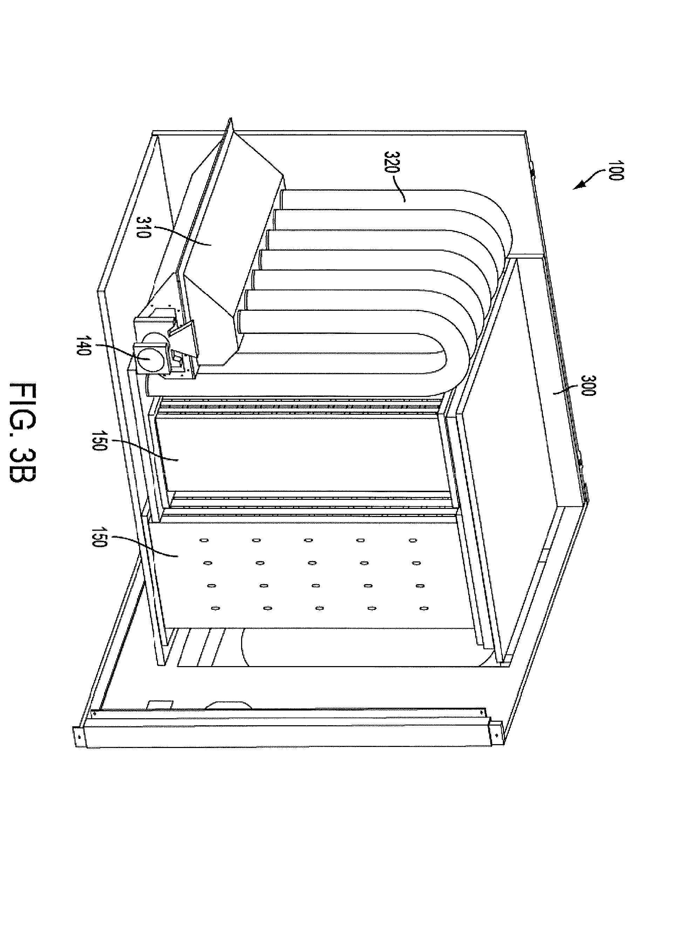

Fig. 3B illustrates another view of heater unit 100 of Fig. 3A. In Fig. 3B, main air fan 340 is not mounted to enclosure 300. In addition, the top of enclosure 300 is not shown for simplicity. As described above, a combustion fan 160 may be mounted adjacent collector box 330 (not shown).

In an exemplary implementation, heater unit 100 may be used as a heater for an interior space, such as for factories, garages, warehouses, buildings, etc. Heater unit 100 may also be used as a duct heater or can be used in connection with air handling units. For example, heater unit 100 may be easily integrated into various different air handling units. In each case, heater unit 100 may provide efficient heating with reduced risk of harmful emissions into an interior space.

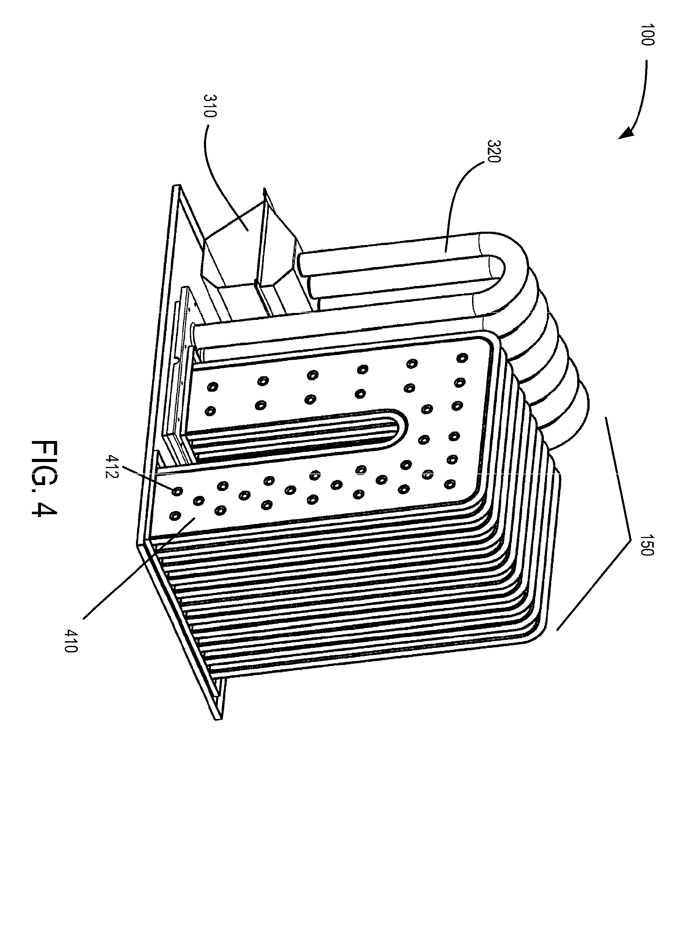

As discussed above with respect to Figs. 1 and 2, heater unit 100 may include various different types of heat exchangers. For example, Fig. 4 illustrates a portion of heater unit 100 in an exemplary implementation. Referring to Fig. 4, heater unit 100 includes burner box 310, a number of tubes 320 and a number of plates 410. In this implementation, heat exchanger 150 is a plate heat exchanger that includes multiple plates 410. Each plate 410 has a relatively large surface area and includes a number of dimples 412. Dimples 412 aid in maintaining spacing between plates 410 to enhance heat transfer.

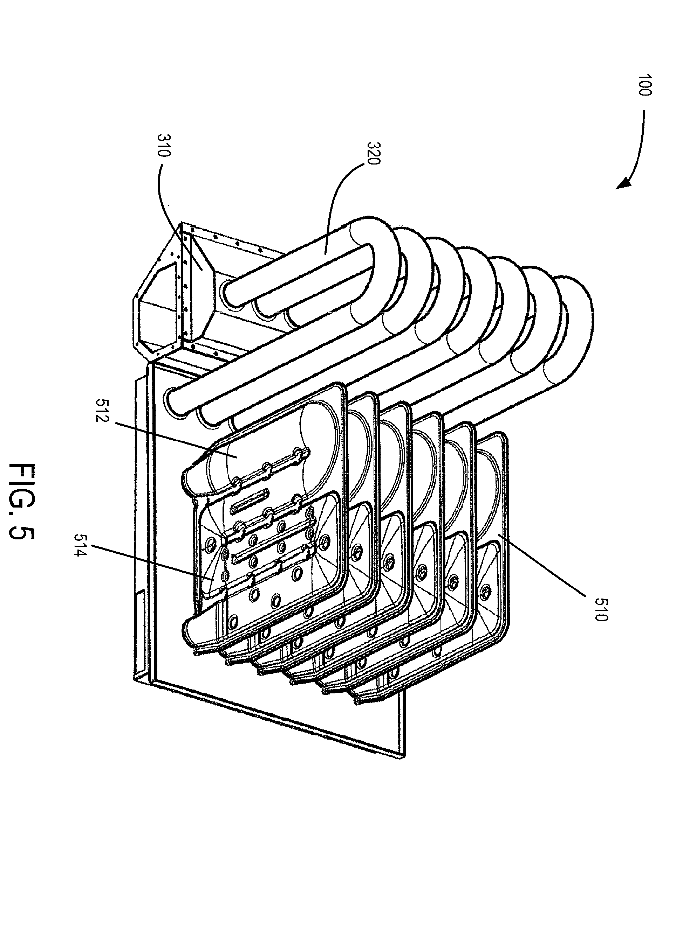

Fig. 5 illustrates a portion of heater unit 100 in another exemplary implementation. Referring to Fig. 5, heater unit 100 includes burner box 310, a number of tubes 320 and a number of plates 510. In this implementation, heat exchanger 150 is a combination of a tube heat exchanger and plate heat exchanger that includes multiple plates 510. Each plate 510 includes a tube element 512 and a plate element 514. Each of plate elements 514 has a relatively large surface area and a number of holes to provide fluid flow passages for heat transfer.

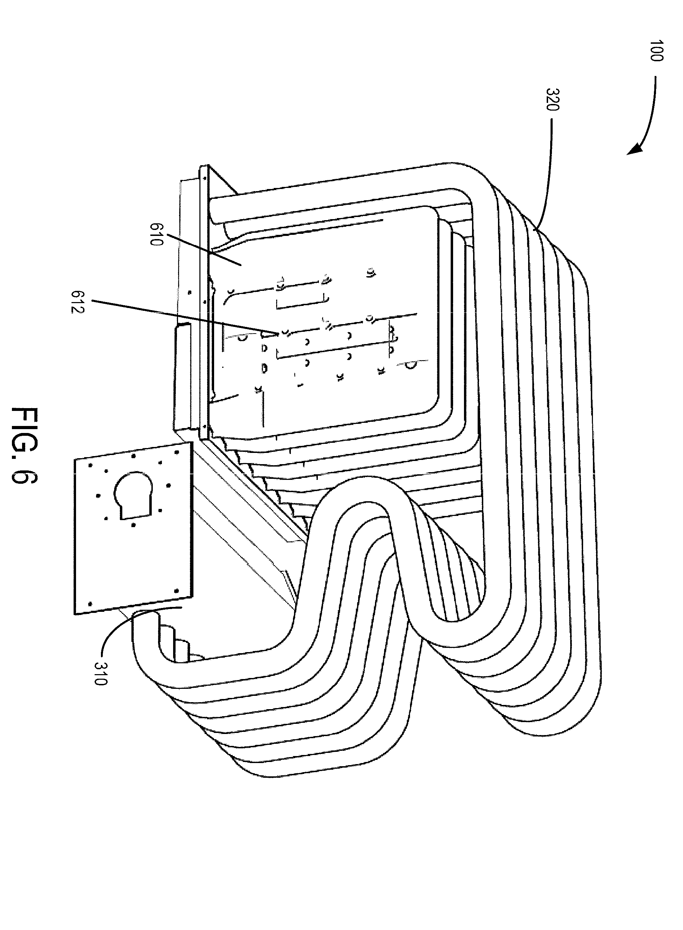

Fig. 6 illustrates a portion of heater unit 100 in a yet another exemplary implementation. Referring to Fig. 6, heater unit 100 includes burner box 310, a number of tubes 320 and a number of plates 610. In this implementation, heat exchanger 150 is a plate heat exchanger that includes multiple plates 610. Each plate 610 has a relatively large surface area and includes a number of indentations or grooves 612 that may increase the surface area of plates 610 to enhance heat transfer.

Heater unit 100, consistent with implementations described herein, may operate to provide heated air to an interior space, while significantly reducing or eliminating a chance of harmful emissions into an interior space. Heater unit 100 may also be relatively compact in size and may be used in conjunction with air handling units, as a duct heater/furnace or with other systems/devices.

The foregoing description of exemplary implementations provides illustration and description, but is not intended to be exhaustive or to limit the embodiments described herein to the precise form disclosed. Modifications and variations are possible in light of the above teachings or may be acquired from practice of the embodiments.

For example, implementations described above refer to heater unit 100 being used with various types of heat exchangers and/or burners. It should be understood that heater unit 100 may be used with other types of burners and/or heat exchangers.

Although the invention has been described in detail above, it is expressly understood that it will be apparent to persons skilled in the relevant art that the invention may be modified without departing from the spirit of the invention. Various changes of form, design, or arrangement may be made to the invention without departing from the spirit and scope of the invention. Therefore, the above mentioned description is to be considered exemplary, rather than limiting, and the true scope of the invention is that defined in the following claims.

No element, act, or instruction used in the description of the present application should be construed as critical or essential to the invention unless explicitly described as such. Also, as used herein, the article "a" is intended to include one or more items. Further, the phrase "based on" is intended to mean "based, at least in part, on" unless explicitly stated otherwise.

## Claims

1. A gas-fired heater (100), comprising:
a gas supply line (110);
an air supply line (130);
a valve (120) coupled to the gas supply line (110);
a controller (122) coupled to the valve (120), the controller (122) configured to control the valve (120) to control a gas-air mixture;
a burner (140) configured to receive the gas-air mixture and burn the gas-air mixture;
a heat exchanger (150) coupled to the burner (140), the heat exchanger (150) configured to perform a heat exchange process and output heated air; and
a fan (160) located downstream of the heat exchanger (150), the fan (160) being configured to draw flue gases through the heat exchanger (150) and provide negative pressure to draw the gas-air mixture through the burner (140) and the valve.

2. The gas-fired heater of claim 1, further comprising:
an enclosure (300) to house the burner (140) and heat exchanger (150), wherein the enclosure (300) includes no secondary air inlets such that no air other than air included in the gas-air mixture is provided to the burner (140).

3. The gas-fired heater of claim 1 or claim 2, further comprising:
a collector box (330) coupled to the heat exchanger (150) and the combustion fan (160); and
a condensate drain coupled to the collector box, the condensate drain being configured to drain condensation from the gas-fired heater.

4. The gas fired heater of any one of claims 1 to 3, wherein the fan (160) comprises a variable-speed fan that does not affect the gas-air ratio provided to the burner (140).

5. The gas-fired heater of any one of claims 1 to 4, wherein the controller comprises:
a pressure regulator configured to:
measure a pressure drop of air in the air supply line across a venture (132), and
control the valve (120) to release an amount of gas based on the measured pressure drop.

6. The gas-fired heater of claim 5, wherein when controlling the valve (120), the pressure regulator is configured to provide a gas pressure corresponding to or in a fixed relationship to the measured pressure drop.

7. The gas-fired heater of any one of claims 1 to 6 further comprising:
a venturi (132) coupled to the burner (140) and gas valve (120), wherein a pressure drop is measured over the venturi (132).

8. The gas-fired heater of any one of claims 1 to 7, wherein the controller is configured to:
provide a constant gas-to-air mixture to the burner (140).

9. A system, comprising:
a gas-fired heater (100), the gas-fired heater comprising:
a gas supply (110),
an air supply (130),
a valve (120) coupled to the gas supply,
a controller (122) coupled to the valve, the controller configured to control the valve (120) to control a gas-air mixture,
a burner (140) configured to receive the gas-air mixture and burn the gas-air mixture,
a heat exchanger (150) coupled to the burner, the heat exchanger configured to output heated air, and
a fan (160) located adjacent the heat exchanger (150), the fan (160) being configured to pull flue gases through the heat exchanger (150) and the gas-air mixture through the burner (140), the valve (120) and a venturi (132) coupled to the air supply.

10. The system of claim 9, wherein the gas-fired heater further comprises:
an enclosure (300) to house the burner (140) and heat exchanger (150), wherein the enclosure includes no secondary air inlets,
a collector box (330) coupled to the heat exchanger (150) and the fan (160), and
a condensate drain coupled to the collector box (330), the condensate drain being configured to drain condensation from the system.

11. The system of claim 9 or claim 10, wherein the fan comprises a variable speed fan (160) that does not affect the gas-air ratio provided to the burner (140).

12. The system of any one of claims 9 to 11, wherein the controller (122) comprises:
a zero pressure regulator configured to:
measure a pressure drop of air in the air supply across a venture (132), and
control the valve (120) to release an amount of gas based on the measured pressure drop.

13. The system of any one of claims 9 to 12, wherein the gas-fired heater further comprises:
a venturi (132) coupled to the burner (132).

14. The system of any one of claims 9 to 13, wherein the controller is configured to:
provide a constant gas-to-air mixture to the burner (140).

15. The system of any one of claims 9 to 14, further comprising:
an air handling unit coupled to the gas-fired heater, and
wherein the heat exchanger comprises a plate heat exchanger or a combination tube and plate heat exchanger.
